# EUROPEAN PATENT APPLICATION

(11) **EP 2 512 106 A1**
(43) Date of publication of application: **17.10.2012**
(21) Application number: 12275045.8
(22) Date of filing: 13.04.2012
(51) Int. Cl.: H04L 29/08

(54) **Method for managing data in M2M systems**

(30) Priority: 15.04.2011 GB 201106427; 11.04.2012 ES 201230541
(71) Applicant: Vodafone IP Licensing Limited, The Connection Newbury Berkshire RG14 2FN (GB); Vodafone España, S.A.U., 28108 Alcobendas, Madrid (ES)
(72) Inventor: Caballero Herrero, José Eugenio, 28050 Madrid (ES); Prabdial, Yakeen, Newbury, Berkshire RG14 2FN (GB); Sendra, José Carlos, 28050 Madrid (ES)
(74) Representative: Ellis, Lyle John

(57) **Abstract**

A method enabling managing sensor devices data by aggregating them in virtual entities: Connected Objects (COs). Third Parties access those exposed data if and only if the Owner of those data grants the corresponding access rights. Since communication is bidirectional, Third Parties can also be granted to manage the device set belonging to those COs for which data access was granted. The method allows managing multiple remote devices, enabling systematic naming and addressing schemes to reach those devices. Eventually, the method enables charging procedures through an Object Charging Data Function entity, which finds out the right Object to be charged for and sends the bill to both Owner and Third parties for the provided services. Charging Objects (CHOs) are those COs exposed for the specific application of charging. A hierarchy is proposed (Organisational, Fundamental, Derived and Temporary CHO) enabling inheritance rules (Reverse and Direct) for access rights and/or charging policy.

## Description

### TECHNICAL FIELD OF THE INVENTION

The present invention has its application within the telecommunications sector and, especially, in the industrial area engaged in Machine-to-Machine (M2M) communications, which involve remote sensor devices that both report and accept instructions over telecommunication networks, including fixed line, cellular and other wireless telecommunication networks.

More particularly, the invention described herein relates to a method for controlling access to data streams from sensor devices.

### BACKGROUND OF THE INVENTION

Machine-to-Machine (M2M) concerns technologies that allow both wireless and wired systems to communicate with other devices of the same ability. A M2M system comprises at least a sensor device (such as a probe or meter) to capture an event (e.g. temperature, inventory level, etc.), which is relayed through a network (wireless, wired or hybrid) to an application (implemented as a software program). The application translates the captured event into meaningful information (for example, items need to be restocked). Such communication was originally accomplished by having a remote network of machines relay information back to a central hub for analysis, which would then be rerouted into a system like a personal computer. However, modern M2M communication has expanded beyond a one-to-one connection and changed into a system of networks that transmits data to personal appliances. The expansion of wireless networks across the world has made it far easier for M2M communication to take place and has lessened the amount of power and time necessary for information to be communicated between machines. These networks also allow an array of new business opportunities and connections between consumers and producers in terms of the products being sold. A technical and business field where M2M is currently applied is charging.

The term "M2M" is used to describe applications in such diverse fields as: tracking and tracing; payment; remote maintenance; automotive and electronic toll; metering; and consumer devices. The augmentation of M2M to allow wireless communications between devices (often referred to as mobile M2M) makes new services possible in some cases (within the automotive industry, for instance) and in others extends existing M2M services (such as within the field of smart metering).

The term "sensor device" in the following document refers to any device that is operable to generate a signal that corresponds to a measured or sensed parameter. In many cases, the term is used synonymously with "machine type communication" (MTC) device or simply "machine" (especially in the context of M2M communications). While such devices may be coupled to a telecommunications network and are entirely fixed, an ever increasing number of devices ("machines") are being provided with wireless telecommunications apparatus (mobile M2M) to facilitate additional information services.

With mobile M2M, machines numbering in the order of millions and located anywhere within mobile network coverage, can be simultaneously monitored to provide real-time information that an individual or enterprise can analyze and act upon. It is predicted that large numbers of "machines" will require access to wide-area mobile networks (such as the GSM, GPRS and/or 3G cellular networks). Each of these machines may have all the basic equipment to allow connection to at least one access network when is required but may only require authentication very occasionally.

The current M2M trend is to evolve toward the "Internet of Things" vision, in which billions of devices will be always connected, and most of them will be low cost, low power consumption and hence low bandwidth demand devices (like simple sensor node devices). Thus, from the providers' point of view, the volume of connected devices becomes more important than the volume of data transmitted by them or the time duration of their wireless connection in applications such as charging. Therefore, a common functionality for managing every connected device by accessing their data is preferable to be shared between different application categories, with the aim to facilitate a more efficient society; for example, in the fields of automotive, supply chain & logistics, healthcare and wellness, building automation, energy management, etc.

On the other hand, in order to be able to access the data from the large number of connected devices, new schemes for naming and addressing of the devices are required. Existing solutions for M2M naming and addressing of the devices are very simple, based on the fact that much of the interaction is only unidirectional, as the sensor is the source of information sending it towards a well-known Uniform Resource Locator (URL) or Internet Protocol (IP) address, which is resident in the device (either manually hardcoded or by a remote firmware upload). However, when a requirement for bidirectional communication is posed, the current approaches do not work anymore and even they have to deal with some extra problems as those derived from the dynamic nature of most of the addresses, the privacy of them, etc. Besides, the current schemes are not flexible enough to cope with different type of addresses, for instance, IP addresses or MSISDNs.

Then, the technical problem is to provide M2M systems with a data management functionality common and sharable for all the different devices and networks of the M2M system which allows access and control of the data exchanged by these devices and the devices themselves, including naming and addressing of the devices for bidirectional M2M communications.

### SUMMARY OF THE INVENTION

In accordance with a first aspect of the invention there is provided a method for managing data in a machine-to-machine (M2M) system in which a first entity has one or more associated M2M devices and in which a second entity requests access to data associated with one or more of the said M2M devices, the method comprising:
defining at least one connected object, each connected object being associated with data from one or more of the said associated M2M devices and each connected object having a corresponding data stream being associated with the first entity;
providing to the second entity partial or full access to one or more of the data streams from the connected objects of the first entity in accordance with permissions set by the first entity.

The present invention serves to solve the aforesaid problem by providing a horizontal layered framework and platform for a whole M2M ecosystem to foster the development of new applications and new business models in different areas (e.g., automotive, supply chain and logistics, healthcare and wellness industry, building automation, energy management, etc.) based on a "Connected Objects Service Architecture". For each M2M deployment, this invention proposes an M2M Service Enablement Platform (based on a middleware infrastructure) that provides horizontal functions common to many and diverse types of M2M remote devices and applications.

An example of the first entity is an "owner customer" and an example of the second entity is a "third party customer". The first entity may therefore be in "control" of the M2M devices whereas the third party customer may be a subscriber to data received, typically selectively, from such devices. The method therefore typically further comprises providing the first entity with access to its corresponding data streams.

Conveniently, a provisioning database may be implemented to retain information upon one or more of the following: first entity identification, second entity identification, the relationship between the connected objects and the M2M devices, the relationship between the connected objects and their first entities, the permissions provided by the first entities to the second entities.

Thus, providing data to the second entity includes publication to the second entity of at least a specific application object, which comprises either: a single connected object, or a certain part of a single connected object or an aggregation of multiple connected objects; the publication comprising an association of the specific application object with data from the connected objects defining said specific application object. The specific application objects may be published in the provisioning database according to hierarchical levels in which a fundamental specific application object occupies a first level in the hierarchy, a derived specific application object is created from one or more fundamental specific application objects in a second hierarchical level and an organizational specific application object is created by aggregation of multiple fundamental specific application objects in one or more further hierarchical levels. Data access rules may be defined for the fundamental specific application objects. The fundamental specific application object may be linked to a unique unambiguous identity of one connected object.
In addition to the specific application objects discussed, in certain cases it may be advantageous to create, temporarily in the provisioning database, a temporary specific application object on request of the second entity, said creating including a mapping between the temporary specific application object and data associated with connected objects which is defined by said second entity and selectively permitted by the first entity. The method may also further comprise granting by the first entity the access to data associated with a specific application object only if the second entity meets data access rules defined in the provisioning database for requesting subscription to the specific application object. The granting of access to data by the first entity may be performed before the second entity requests the data. Furthermore, the granting of access to data by the first entity may be performed individually to said second entity and comprises specifying a list of data sets to be associated with the second entity in the provisioning database. The granting of access to data by the first entity also may be performed to a list of second entities and comprises specifying a list of data sets to be associated with the list of second entities in the provisioning database. In other cases the granting of access to data by the first entity is performed after the second entity requests the data and only if the second entity meets the data access rules defined in the provisioning database for requesting subscription to the specific application objects associated with the requested data.

In some implementations, the associating of data with connected objects, specific application objects and second entities comprises accessing by the provisioning database to a data storage database, in which data is stored and from which data is delivered when granted access, using respective unique unambiguous identities of the connected objects, specific application objects and second entities.
In some examples the specific application objects are for a specific application which is charging and the unique unambiguous identity of each defined connected object is used to correlate different sources of data related to charging. The method may include correlating the data related to charging with specific application objects by an object charging data function entity, to which both the first and second entities have access through the provisioning database.

It will be understood that associating data with the M2M devices may comprise defining by the first entity a data stream which is a single data entity unambiguously associated with a connected object defined by the first entity in the provisioning database.

A key added value of the invention is a Third Party Customer Subscription Management procedure, which is one of the many possible sets of common functions offered by the proposed M2M Service Enablement Platform. This procedure is a common functionality, in particular, a Data Brokerage Functionality, which enables Third Party Customer applications to subscribe to the data published by connected devices which are exposed by an Owner Customer for trading purposes. To facilitate such as Subscription Management capability, the term "Connected Object" is introduced, as a logical arrangement of devices made by the Owner, ranging from one-to-one to many-to-one devices per object. The middleware Platform described below facilitates a Subscription Service, managed by the Owner Customer by means of Data Access Rules, or permission rules. This common functionality allows Third Party Customers to develop or integrate M2M applications which are nurtured with data coming from remote sensor devices placed at sensor networks or single modules which manage its fixed or mobile connection to the M2M platform, neither deployed nor owned by those Third Party Customers. Therefore, an advantage of the invention is that the Third Party Customers are keen to accept them being charged by the use and consumption of the exposed data and only by the data which can be of interest to them.

Another advantage of the invention is that provides a Naming and Addressing procedure to reach and remotely manage any sensor or actuator placed in a remote device connected to the M2M Service Enabler Platform. The device may be a single node or any end-node belonging to a sensor network. In the last case, the reach-ability of the remote device is achieved by interacting with a gateway node of a sensor network, which translates the device management action to the end node by means of its own naming and addressing procedures implemented by the sensor network communication protocol. The invention enables the transmission and reception of any type of device management request/response message related to device monitoring, configuration, reporting or control. Examples are:
- Monitoring of: Wireless sensor network topology; Remote device Identification; device abilities; device status, battery status etc.
- Configuration: Device parameters settings (e.g. thresholds for readings and triggering actions); gateway configuration, Remote software upgrades, etc.
- Reporting of: Device failure or Last data collected, etc.
- Control of: Device on/off; sensor node wake up, start/stop measurements, go to sleep; connectivity testing, etc.

In order to achieve the aforementioned goals, a multi-tier naming scheme is proposed, able eventually to identify the lowest user-required connected object. That is, it is the same Owner of the connected object to the M2M platform who defines the level of granularity of their sensor network. Sometimes that granularity can be based on the Owner preference, but, being more realistic, the vast majority of the times it is the inherent addressing limitations of the deployed M2M Wireless Sensor Network (WSN) protocols which impose that granularity. Despite that, the scheme defined here is able to address whatever was the reachable lowest level of the sensor node in a network.

The invention defines procedures and rules whereby a given name linked to a reachable address (e.g., IP address, MSISDN number,...) is considered unique and guarantees this uniqueness. Moreover, rules for exposing that name to the outside world are defined, granting enough confidence to ensure the referencing to the right connected device. And all above by using a procedure that avoids complex tasks of reconfigurations in the, possibly already deployed, connected sensor networks. In addition, a logical and seamless procedure of registration and linkage is defined in order to transparently associate the deployed identities to the new provisioned names and identities.

In the context of examples of the invention to be described, the following terms and definitions apply:
Generic M2M Service Enablement Platform: It is a service platform offering a horizontal layered and open framework attracting Enterprises and Developers to an ecosystem where multiple M2M applications may be created and commercialised based on the collected data from a diverse multitude of remote devices. The offered services are scalable and adaptable to a wide set of Platform Customer's applications.
Connected Object (CO): A single M2M remote device or a logical set of M2M remote devices. They can belong to one or several sensor networks (wired or wireless) connected to a generic M2M Service Enablement Platform by means of gateway nodes provided with active communication bearers that allow any connected device to send/receive information to/from any specific or general source of information. Examples of sensor networks are generic purpose Wireless Sensor Networks based on different short range wireless technologies like ZigBee, 6lowPAN, Bluetooth / Bluetooth Low Energy, WiFi, Z-Wave, etc.
Owner Customer: It is the owner of the M2M devices connected to a generic M2M Service Enablement Platform and, in consequence, the owner of the collected and managed data. The Owner Customer has to have a contractual relationship with a network operator (fix or mobile) to provide service connectivity to their devices. The Owner customer may define its relevant COs, being each CO associated to either a single M2M device or a set of M2M devices connected to the platform. The Owner has the rights for the functions those devices can perform. An Owner Customer is by default subscribed to its COs. In consequence, its applications connected to the platform can consume them. The Owner Customer can create as many as necessary COs (ranging from "1 to n") satisfying its own criteria and also define specific alerts or warning threshold levels, which may trigger a specific notification. The Owner Customer has the rights to retrieve data from its COs; for example, a CO may be defined simply for the data sensed by a unique sensor in a certain place, or may be defined for the collection of data sensed from a set of remote sensors (of the same type or different type of sensors) distributed in a determined area of relevancy for the customer.
Data-Stream (DS): A data-stream is the single data entity managed by a generic M2M Service Enablement Platform and unambiguously associated to a Connected Object (CO), which belongs to one and only one Owner Customer.
Third Party Customer: It is another customer of a generic M2M Service Enablement Platform with granted permissions provided by an Owner Customer of the same platform to consume the Owner Customer's data published in this generic M2M platform. This service is enabled by means of a subscription service to data brokerage functionality. A Third Party Customer has granted permissions for subscription to a given entity called a "Specific Application Object (SAO)", which can be just one Connected Object, an aggregation of Connected Objects or a subset of a Connected Object exposed by an Owner Customer for trading purposes. In consequence, a Third Party Customer can also define alerts and receive notifications originated from the defined event circumstance.
Data Brokerage Functionality: It is a common function provided by a generic M2M Service Enablement Platform which enables a Third Party Customer to subscribe to a Specific Application Object. Each SAO can contain valuable information for applicability in specific M2M vertical sectors; e.g.: service charging, measuring of energy parameters for consumption control, collecting parameters related to health care, critical information in industrial environments for machine monitoring and control, home and building automation, logistic management, connected car services as assisted driving or emergency notifications, etc.). This subscription service is managed by the Owner Customer by means of Data Access Rules, or permission rules.
Data Access Rules: Permissions rules set by the Owner Customers providing the capability of accessing and consuming content associated to a Specific Application Object, every time it is updated (subscription granted).
Specific Application Object: A virtual entity composed of either one Connected Object, or an aggregation of Connected Objects or a subset of a Connected Object; which must be treated as an individual entity for the specific purposes defined by the Application of the M2M Service Enablement Platform; (e.g., charging, health control, energy consumption supervising, industrial machinery monitoring and control, home and building automation, public light efficient control, selective garbage recollection, logistics management, on street parking operations, green zones watering control, road usage control, driving assistance, disaster recovery and public safety assistance, gaming, robotic, etc....).
Specific Application Object Generation: Procedure whereby a customer of a generic M2M Service Enablement Platform (or the administrator of such as platform) decides which Data set from its provisioned Connected Objects can be linked to a SAO, for application-specific purposes. The outcome of this procedure is the creation of a SAO Catalogue.
Provisioning Functional Entity: It is, by nature, a database of a generic M2M Service Enablement Platform with communications capabilities in which all the parties (customers, applications, etc.) have to be registered in order to store all the information needed to run the services. Also the access permissions for Data-Brokerage function are stored here.
Subscription Management Functional Entity: It is the functional entity of a generic M2M Service Enablement Platform keeping track of the customer subscriptions to the data being published or delivered by the M2M devices and which are exposed in the SAO Catalogue.
Security, Authentication and Privacy Functional Entity: It is implemented in a security module. This is the entity for checking the customer credentials, which are required to grant access to the main part of generic M2M Service Enablement Platform procedures.
Data-stream (DS) Management Functional Entity: It is the core of a generic M2M Service Enablement Platform for data processing, data storage and data forwarding.
Specific Application Object Identity: A valid identity assigned to a SAO. This identity (ID) is used to correlate different sources of information related to the application.
Fundamental Object (F-SAO): It is a SAO acting as the starting point for a hierarchy of Specific Application Objects structure. An F-SAO has a SAO_ID associated with it.
Derived Object (D-SAO): A new SAO that can be created from one or several F-SAOs. A D-SAO may also be created either by aggregation of more than one Derived Objects, or from a specific Derived Object; defining, then, a Hierarchy of Specific Application Objects. A D-SAO has a SAO_ID associated with it.
Organization Object (O-SAO): A SAO abstraction composed by aggregation of Fundamental Objects. It is possible to add more than one level of Organization Objects.
Temporary Object: A SAO requested by a Third Party Customer. It is a different arrangement of the exposed object with respect to what the Owner had decided. It must be agreed by the Owner and are only created temporarily.
The present invention provides functions, for example, subscription management, common to many and diverse type of applications and devices. This has two implications: on one side, the enablement of the right means to the Owner Customer for accessing and consuming a specific stream of data originated in its own devices; and on the other side, the enablement of a sensor data brokerage function, allowing the Owner customer to manage Third Party (e.g. developers, system integrators, application service providers, etc.) data access permissions.
The present invention provides a Generic M2M Service Enablement Platform with a Third Party subscription functionality by means of interfaces transparent to the services of the Third Party and which allow the Owner Customer to manage and publish data for other customers (and even charge, for example, for the use of these data by other customers).
The present invention provides the Owner Customer with tools (data-delivery authorization rules) to guarantee a controlled access to the data, so that the Owner Customer can grant or deny individual attempts to data access, for each data source and also for each data access attempt, minimizing at the same time the rate of "disturbing" request for granting accesses. The data-delivery authorization rules are based on mixing two types of authorization modes:
   - Indirect authorisation, by which the Owner Customer authorizes access to the data before being requested by anyone. The Owner Customer can consider individual authorizations, contact list authorizations (White List). Default list authorization and a barred list (Black List) of unauthorised users is also possible.
      ○ For contact list authorization, the Owner Customer specifies the set of data to be associated with a Contact List. There may be more than one data set per Contact List. The data assigned to the Contact List are accessible by all Third Party customers in that Contact List except those customers who have individual authorization. Individual authorization has the highest priority.
      ○ For individual authorization, the Owner Customer specifies sets to be associated with a Third Party Customer. There needs to be additional notification if the authorized customer requests other data set than the ones authorized.
      ○ The Owner Customer can specify a list of default exposed data set (default list authorization); a data set available for all customers who do not belong to the barred list (of unauthorized users).
      ○ There may be more than one data set per Third Party Customer. When a Third Party Customer is authorized both individually and via a Contact List, then the individual authorization has priority over list authorization, i.e. the individual's data set overrides the data set of the Contact List.
      ○ If the Third Party Customer requests other data sets than those authorized by the Owner Customer, direct authorization is applied. If the Owner Customer indirectly authorizes a given Third Party Customer via individual authorization, but with indication of being notified when this authorized subscriber requests other data set than the ones that are already authorized, the Subscription Management entity notifies the Owner Customer. This notification contains the Third Party Customer-ID and the list of additional requested data sets,
         currently not authorized.
   - Direct authorization, by which the Owner Customer authorizes data access based on a specific request. If the Owner Customer does not authorize the Third Party Customer in any way (nor individual nor contact list authorization, and the requested data list is not covered in the default data list), the Owner Customer notifies about additional data set requests than those authorized via the Default List. Thus, the Subscription management entity notifies the customer, asking for explicit authorization. The notification contains the Third Party Customer-ID and the list of additional requested data sets that are currently not authorized.

The data-delivery authorization rules are stored in the Provisioning Database entity, linked to the data being authorized to deliver which are stored in a Data Storage entity. They need some interaction with a Provisioning database in order to complete the information required (Third Party Contact-List IDs, Third Party Customer-IDs, etc.). The procedures related to the authorization interactions guarantee that the number of interactions with the Owner Customer is kept at the lowest level possible. The (direct or indirect) authorization can be targeted to either individual customers or to a group of customers through a Contact List, or to the general public through a Default List. The actual data that are authorized to be delivered must be defined in a Specific data set.

An implementation of the invention refers to a method for managing data (recollection, processing and exposition of data) in M2M systems (i.e., in any generic M2M Service Enablement Platform), which comprises the steps of:
- registering an owner customer and a third party customer (additionally, their applications, etc. are registered; normally, all the information required to run services in a M2M system) in a provisioning database belonging to the M2M system;
- defining by the owner customer at least a connected object (CO), which is associated, in the provisioning database, with data from either a single M2M device or a set of M2M devices of the owner customer;
- subscription of the owner customer to every defined (by the owner customer itself) connected object by validating a unique unambiguous identity (CO_ID) of each CO in the provisioning database;
- publication to the third party customer by the owner customer, in the provisioning database, of at least a specific application object (SAO), which consists of a single CO, a certain part of a single CO or an aggregation of multiple COs, the publication comprising an association of the SAO with data from the connected objects which are defining said specific application object;
- definition by the owner customer, in the provisioning database, of data access rules for enabling the third party customer (i.e., its registered applications) to request subscription to a SAO which is published to said third party customer.

The mapping or linking of specific application objects to connected objects defined by the owner customer (and associated with data of its M2M devices) in the provisioning database can follow a hierarchy of levels as defined before: with Fundamental SAOs at a starting level of the hierarchy, Derived SAOs at a next level and adding levels by defining one or more levels of Organizational SAOs, for instance. Temporary SAOs to allow the third party customer to modify (under the owner customer's permission) this initial mapping between SAOs and COs defined originally by the owner customer is also possible in dependence of the specific application to which the third party customer is registered.

The method enables an owner customer to grant third party customers for the transmission and reception of any type of device management request/response message related to device monitoring, configuration, reporting or control.

In accordance with a second aspect of the invention there is provided a machine-to-machine (M2M) system comprising:
one or more M2M devices associated with a first entity;
an M2M Service Enablement Platform connected to each of the one or more M2M devices and configured to selectively permit a second entity to access data associated with one or more of the said M2M devices,
a provisioning database associated with the M2M Service Enablement Platform, the provisioning database defining at least one connected object, each connected object being associated with data from one or more of the said associated M2M devices and each connected object having a corresponding data stream being associated with the first entity;
wherein the M2M Service Enablement Platform is configured to provide the second entity with partial or full access to one or more of the data streams from the connected objects of the first entity in accordance with permissions set by the first entity.

It will be appreciated that the system of the second aspect is preferably configured to perform the methods according to the first aspect of the invention. The system may comprise one or more application objects for providing data from part or each of one or more connected objects to the second entity. Typically, in a preferred example of the system, a number of M2M devices provide data to the M2M Service Enablement Platform over a wide area mobile telecommunications network.

In accordance with a third aspect of the present invention there is provided a computer program comprising computer program code means adapted to perform the steps of any of the methods of the first aspect, when said program is run on at least one programmable electronic device. Such devices include: a central processing unit or processor of a computer, a general purpose processor, a digital signal processor, a field-programmable gate array, an application-specific integrated circuit, a micro-processor and a micro-controller or any other form of programmable hardware for integration into an M2M system.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows a block diagram of Connected Object Service architecture for Charging Service Application in accordance with a possible embodiment of the invention.
Figure 2 shows a block diagram of functional entities and domains, as well as their relationship through communication interfaces, involved in charging based on the Connected Object Service architecture in accordance with a possible embodiment of the invention.
Figure 3 shows a schematic representation of a logical association of M2M devices with Connected Objects and mapping between Connected Objects and Specific Application Objects for Charging, by owner customer of the devices, in accordance with a possible embodiment of the invention.
Figure 4 shows a Provisioning Tree of Connected Object identities ranged in levels by owner customer, in accordance with a possible embodiment of the invention.
Figure 5 shows a hierarchical structure of Specific Application Objects for Charging mappable to the Provisioning Tree, in accordance with a possible embodiment of the invention.
Figure 6 shows a block diagram of direct inheritance of access rules on Specific Application Objects for Charging, in accordance with a possible embodiment of the invention.
Figure 7 shows a flow diagram of messages for a subscription process to a Specific Application Object for Charging in which direct inheritance of access rules apply, in accordance with a possible embodiment of the invention.
Figure 8 shows a block diagram of reverse inheritance of access rules on Specific Application Objects for Charging, in accordance with a possible embodiment of the invention.
Figure 9 shows a flow diagram of messages for creation process of a Temporary Charging Object, in accordance with a possible embodiment of the invention.
Figure 10 shows a flow diagram of messages for provisioning process of a Fundamental Charging Object, in accordance with a possible embodiment of the invention.
Figure 11 shows a flow diagram of messages for provisioning process of a Derived Charging Object, in accordance with a possible embodiment of the invention.
Figure 12 shows a flow diagram of messages for provisioning process of a Organization Charging Object, in accordance with a possible embodiment of the invention.
Figure 13 shows a flow diagram of messages for a subscription process to a Specific Application Object for Charging selected from Fundamental, Derived and Organization, in accordance with a possible embodiment of the invention.
Figure 14 shows a flow diagram of messages for an online charging process implemented by an Object Charging Data Function using the Specific Application Objects for Charging, in accordance with a possible embodiment of the invention.

### DETAILED DESCRIPTION OF THE INVENTION

A preferred embodiment of the invention is focused on a method of control the data streams originating from different devices connected to a sensor network in order to control charging events associated to these sensor devices. This method enables charging procedures between Owner and Third Parties with granted access. A Connected Object Based Charging is described as a meta-charging approach that pays more attention to the element being charged rather than in the specificity of the collected charging information of that element. That is, in any of the current charging approaches, the charging information is always checked against the bill assigned to an individual user account; meanwhile, in the Connected Object Based Charging, the charging information is checked or charged against individual object accounts. The Connected Object Based Charging takes advantage of the volume of connected devices rather than legacy charging models based on volume of data transmitted, time duration of the connection or event charging.

In the M2M ecosystem, the concept of mobile or telephony subscriber becomes less accurate for describing the role of the elements that are going to interact with the mobile network. And therefore, the classic charging approaches are not flexible enough to cope with all the incoming requirements of mobile services.

In the telecom business, there are only two major modes of charging: defined as Offline and Online. The main difference boils down to the capacity to render the required service after checking the costumer account in real time or not. Those two major modes are related to some charging strategies, which can be applicable to one or both modes. It that sense, it can be defined, for instance, an Online Flow Based Charging, an Offline Volume Based Charging or an Online Session/Event Based Charging.

It is required to introduce some element in the current charging architecture solutions in order to bring about the intelligence needed to implement the Connected Object Based Charging. The main functional element required for that is called the Object Charging Data Function (OCDF), which is responsible of finding out the right object to be charged for and sending the billing request with this information up to date. The architectural relationship of the OCDF with the rest of functions in the legacy charging architectures of a mobile network operator is described below.

The Connected Object Based Charging proposes a hierarchical structure that has to be defined in advance of the charging process. This structure is needed in order to correctly assign the chargeable item to the right bill and facilitate new charging rules for the Connected Objects Service Architecture broker element, which is an M2M added value Service Enabler Platform. The Owner customer is the entity who owns the connected objects/devices/machines into this broker platform.

Additionally, this hierarchy defines some relationship between different object bills based on concepts as Reverse Inheritance: it is possible that a Fundamental Object can inherit the bill assigned to its Derived Object. This hierarchy facilitates new charging rules for an Owner customer to a Third Party customer.

For the particular embodiment of the invention described here, the following terms and definitions apply:
Charging Data Record (CDR): record generated by a network element for the purpose of billing a subscriber for the provided service. It includes fields identifying the user, the session and the network elements as well as information on the network resources and services used to support a subscriber session. In the traditional circuit domain, CDR has been used to denote "Call Detail Record", which is subsumed by "Charging Data Record" hereafter.

Partial CDR: CDR that provides information on part of a subscriber session. A long session may be covered by several partial CDRs. Two formats are considered for Partial CDRs: one that contains all of the necessary fields and a reduced format.

Billing: Is the mechanism of processing and rendering a bill. Therefore, those Charging Data Records (CDRs) generated by the charging function are transformed into bills requiring payment.

Billing Domain: Part of the operator network, which is outside the core network, which receives and processes charging information from the core network charging functions. It includes functions that can provide billing mediation and billing end applications.

Charging: Process of collecting data for monitoring of resource usage, accounting and (or) billing. Therefore, it provides a function whereby information related to a chargeable event is formatted and transferred in order to make possible to determine usage for which the charged Party may be billed.

Charging Object (CHO): It is a particular implementation of the previously defined Specific Application Object for charging, being a virtual entity composed of one Connected Object, an aggregation of Connected Objects or a subset of a Connected Object; which must be treated as an individual entity for charging purposes.

Charging Object Generation: Procedure whereby a customer of a generic M2M Service Enablement Platform (or the administrator of such as platform) decides which Data set from its provisioned Connected Objects is linked to a Charging Object, for charging purposes.

Charging Object Identity (CHO_ID): A valid identity assigned to a specific Charging Object. The CHO_ID is used to correlate different sources of charging related information.

Chargeable event: any chargeable activity utilizing the generic M2M Service Enablement Platform network infrastructure and related services.

Charged Party: user involved in a chargeable event that has to pay parts or the whole charges of the chargeable event, or a Third Party paying the charges caused by one or all users involved in the chargeable event, or a network operator.

Object Based Charging: Charging policy where chargeable events are referred to the entity defined as the Charging Object. The Object Based Charging can be offline or online and based on session, event or flow.

Offline charging: Charging mechanism where charging information does not affect, in real-time, the service rendered.

Online charging: Charging mechanism where charging information can affect, in real-time, the service rendered and therefore a direct interaction of the charging mechanism with session/service control is required.

Fundamental Charging Object (F_CHO): A Charging Object associated to a provisioned Connected Object in a provisioning database, which is the starting point for a hierarchy of Charging objects structure. A Fundamental Charging Object has a Charging Object ID associated.

Derived Charging Object (D_CHO): A new Charging Object that may be created from one Fundamental Charging Object or several F-CHOs. A Derived Charging Object may also be created either by aggregation of more than one Derived Charging Objects, or from a specific Derived Charging Object; defining, then, a Hierarchy of Charging Objects. A Derived Charging Object is always a Charging Object and therefore it has a Charging Object ID associated.

Organization Charging Object (O_CHO): A Charging Object abstraction in the sense that it is not linked whatsoever to a Connected Object. It is composed by aggregation of Fundamental CHOs and it is possible to add more than one level of Organization Charging Objects.

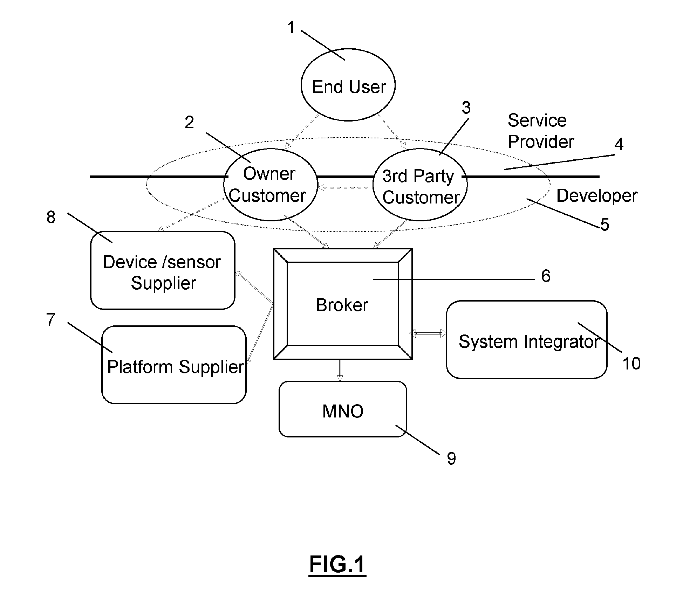

Figure 1 shows a diagram of the parties and their interactions in the Connected Object Based Charging model, which can implement the following money flow paths:
- Between an Owner Customer 2 and a Broker 6 who owns the Connected Object Based Charging platform: The Broker 6 defines charging rules depending on the platform resources usage associated to the Connected Object defined by the Owner Customer 2.
- Between the Owner Customer 2 and a Third Party Customer 3: The Broker 6 provides the Owner Customer 2 with means for charging the Third Party Customer 3 for the usage of the Owner's connected objects or parts of these objects.

Note that both the Owner Customer 2 and the Third Party Customer 3 can take the role of a Service Provider 4, serving incoming requests from the End User 1, or play the role of a Developer 5 targeting requests to the Broker 6 from end users and customers which are charged parties. In turn, the Broker 6 plays the Data Brokerage Functionality common to the M2M Service Platform Supplier 7 as well as the supplier of the sensor devices 8 associated with Connected Objects and the Mobile Network Operator 9 of the network to which the devices connect. The system integrator 10 can play sensor device supplier 8, service provider 4 and/or developer 5 roles all together in integrated turnkey solutions for the End Users 1.

The Connected Object Based Charging is a meta-charging approach that pays more attention to the element being charged rather than in the specificity of the collected charging information of that element. That is, in any of the existing charging strategies (in any of the two possible charging modes: online or offline, e.g. Online Flow Based Charging, Offline Volume Based Charging or Online Session/Event Based Charging) the charging information is always checked against the bill assigned to an individual user account; meanwhile, in Connected Object Based Charging, the charging information is checked or charged against individual object accounts (Charging Objects Accounts).

Additionally, the Charging Object (CHO) plays an important role in how the access permissions are assigned and derived to the different data being traded. CHOs have a hierarchical structure defined in advance of the Chargeable Event. This structure is needed in order to correctly assign the chargeable event to the right bill, allowing the Broker 6 to define new charging rules for the Owner Customer 2. Additionally, this hierarchy defines some relationship between different individual Charging Objects Accounts. Two classes of hierarchy are defined: Reverse Inheritance, in which an Organization Charging Object (O_CHO) can inherit the charging scheme assigned to the Fundamental Charging Objects of which this O_CHO is composed; and vice versa with Direct Inheritance. Therefore, a Fundamental Charging Object (F_CHO) can inherit the bill assigned to its Derived Charging Object (D_CHO), which also facilitates the definition of new charging rules for the Owner Customer 2 by the Third Party customer 3.

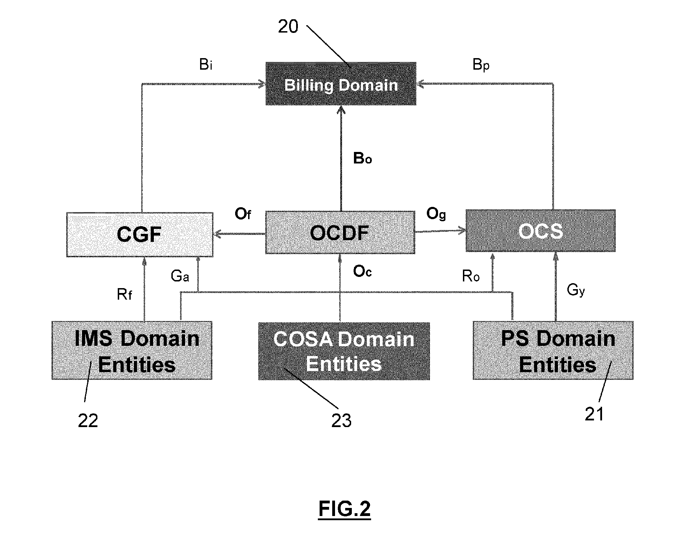

According to the definition outlined above, Figure 2 shows the main functional element introduced in the current charging architecture solutions in order to bring about the intelligence required for implementing the Connected Object Based Charging concept. This common function element is called the Object Charging Data Function, OCDF, which is responsible of finding out the right object to be charged for, formatted and transferred it to the billing request with this information updated from the Connected Object Based Charging domain 23. The Connected Object Based Charging domain 23 makes possible to determine usage for which the charged Party may be billed. On that purpose, the M2M Service Enablement Platform architecture allows a complete logging of eventual chargeable events as they are processed through. Thus, Event Data Records (EDR) can be logged to an Event Database which is the core element of the Connected Object Based Charging domain. From EDR, the Owner Customer 2 decides its chargeable event policy.

Figure 2 also illustrates the architectural relationship of the OCDF with the rest of functions in the legacy charging architectures of a mobile network operator interacting within a Billing domain 20. The Billing domain 20 is responsible for processing and rendering a bill to the Customers of the M2M Service Enablement Platform.
- the Online Charging System, OCS, which allows a communications service provider to charge their customers, in real time, based on service usage in Packet Switching (PS) domain 21,
- the 3GPP Charging Gateway Function, CGF, used in GSM/GPRS/UMTS/IMS domain 22.

According to this the Connected Object Based Charging concept, three new interfaces are provided, as shown in Figure 2: the Oc, Og and the Of interfaces between the OCDF and respectively the Connected Object Based Charging domain 23, PS domain 21 and IMS domain 22. If the OCDF is implemented as part of both the CGF and the OCS, these Oc, Og and Of interfaces can be internally defined (therefore, proprietary).

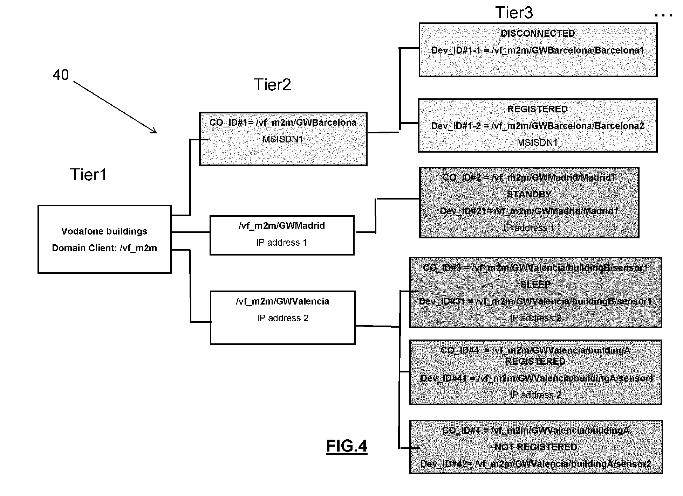

The OCS can perform charging correlation according to 3GPP TS 32.296 "Telecommunication management; Charging management; Online Charging System (OCS): Applications and interfaces (Release 10)" (Section 4: "Required functionality of the OCS"). The CFG can get charging records correlated from multiple Data Streams by a centralised Charging Data Function (CDF) according to 3GPP TS 32.240 Telecommunication management; Charging management; Charging Architecture and Principles (Release 9)" (figure 4.2 "Logical ubiquitous charging architecture and information flows" and figure 4.3.1 "Logical ubiquitous offline charging architecture"). Another new interface is provided, between the OCDF and the Billing domain 20: the Bo interface, which is defined for charging the externals interactions on behalf of the Owner Customer 2.

The Object Based Charging Correlation Information can be encoded in a specific header of all messages managed by a generic M2M Service Enablement Platform. Any functional entity of the generic M2M Service Enablement Platform is responsible to populate that header before issuing any message. The only required information in that header is the Charging Object Identity (CHO_ID). How any specific functional entity finds out the CHO_ID in a generic M2M Service Enablement Platform strongly depends on the messages (request-response) involved in the interaction. In some of those interactions, the CHO_ID is an inherent part of the message (for instance, a subscription to a CHO, which is implemented using the CHO_ID as the pointer), but in others it can be required to have dedicated interactions with the generic M2M Service Enablement Platform Provisioning Database, which is the entity where the CHO_ID is mainly stored, in order to achieve knowledge of that parameter.

The CHO_ID is used as the pointer against the OCDF entity in order to ask for authorization to implement the requested interaction and the specific conditions under which the interaction can be delivered to the platform Customer. For that, in some cases the OCDF can need to interact with the CGF and OCS functional entities in order to achieve not only any required charging related information but also to impose to those entities those Object Based Charging applicable rules. It is responsibility of the OCDF to correlate the Object Based Charging information with the information used in the referred entities in order to get access to the right charging related information (for instance, the right Charging Rule stored in the OCS entity) or to impose the Object Based Charging rules to the right customer interactions.

Charging Objects are mapped to Connected Objects implemented in a provisioning database of a generic M2M Service Enablement Platform. This mapping is carried out exclusively by the Owner Customer 2 after strict checking of its credentials. The Owner Customer 2 has some API primitives available and primitives provided by a Web interface in order to accomplish said mapping.

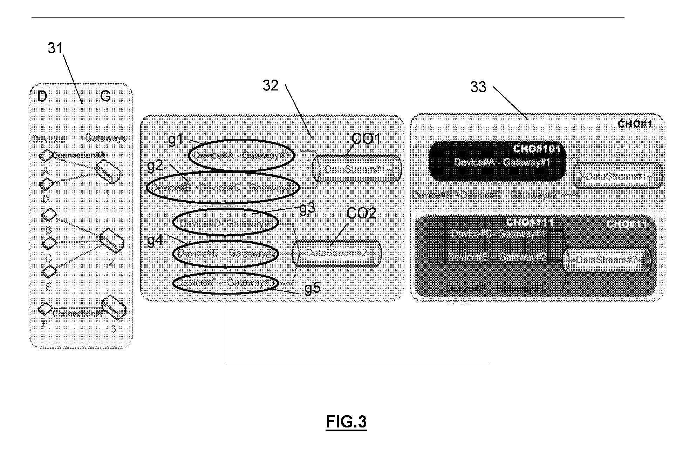

The Owner Customer 2 of a generic M2M Service Enablement Platform can define 31, as shown in Figure 3, different groups of his/her assets (e.g., remote M2M devices D and gateways G), based on what is relevant for its business. This implies the provision of a set of Connected Objects to this platform. Groups of assets, g1, g2, g3, g4, g5, are mapped 32 in the platform into, for example, two Connected Objects CO1 and CO2. Every CO is processed by the M2M Service Enablement Platform as a Data-Stream, DS1 and DS2 respectively in Figure 3, which is the single data entity managed by this Platform and unambiguously associated to a Connected Object. In order to expose the collected data for Third Party Customer consumption (enabling a new Data Brokerage functionality in the Platform) the Owner Customer 2 may configure a set of Charging Objects, CHO#1, CHO#10, CHO#101, CHO#11, CHO#111, which can be associated 33 to one whole Connected Object, an aggregation of Connected Objects or a part of an individual Connected Object.

In a generic M2M Service Enablement Platform, the Owner Customer 2 defines Connected Objects mapped to which sources of data are included in a specific Data-Stream, and this mapping is taken into account by the correspondent data management functional entities in the M2M Service Enablement Platform, in order to compose the messages according to this arrangement. Additionally, a complete or stripped version of the information contained in a Connected Object is the element exposed by the Owner Costumer 2 to those Third Party Customers 3 for eventual subscription and other platform operations. That is, the Connected Object is the key element of the data management entity defined in a generic M2M Service Enablement Platform.

Therefore, the Charging Object approach adds a virtual organization on top of the real and physical organization described through the Connected Object identities. This virtual approach brings a lot of value and simplicity on how the Customers of a generic M2M Service Enablement Platform (either an Owner Customer 2 or a Third Party Customer 3), who can access to the collected data from M2M remote devices, being charged exactly for what they want to access to. As a summary, the main advantages of the present approach are:
- Possible volume-aggregation based discount.
- Clearer Charging: It is easy for any Owner Customer 2 or Third Party Customer 3 to understand what it is charged for.
- Flexible Charging: It is possible to change easily the tariff being applied to a specific object.
- Managing accesses to the data easily: The same clarity applicable to the charging is applicable to what data the customer is accessing.

A naming and addressing architecture that enables an unambiguous procedure for remote device reach-ability and the Connected Object definitions guides the Owner Customer 2 in provisioning Connected Objects with customized configuration. This naming and addressing architecture eventually determines the level of exposition of the collected data to Third Party Customer's applications consumption (if the subscription service allows them). Figure 4 exemplifies how an Owner Customer 2 can configure a specific Connected Object identity (CO_ID) in a provisioning tree 40, independently of the range (Tier) of that identity. Additionally, that decision is important, because the CO_ID might be related to the charging object exposed to outside world for Third Party subscription to the Owner Customer data and, more important even, any rule or access restriction is linked to the defined CO_IDs. In the example of Figure 4, there are four Connected Objects CO_ID#1, CO_ID#2, CO_ID#3, CO₋ID#4. CO_ID#1 is composed by the contribution of two devices, Dev_ID#1-1 and Dev_ID#1-2; CO_ID#4 is composed by the contribution of other two devices, Dev_ID#41 and Dev_ID#42; while the other two COs have only one contribution of a different device in each case, Dev_ID#21 and Dev_ID#31. In the example of Figure 4, three ranges of COs identities: Tier1, Tier2 and Tier3. The provisioning tree 40 obtained by this naming and addressing of COs can grow by adding Tier 4 and subsequent tiers, in the case that some remote device may have routing capabilities to connect to any other far remote sensor node. This procedure of naming and addressing is very powerful and flexible because it provides means of defining a unique name linked to a reachable address (e.g., IP address, MSISDN number, addresses used by protocols such as SIP or the MQ Telemetry Transport -MQTT- protocol, etc.), in order to customize what data the Owner Customer 2 wants to expose to rest of the world.

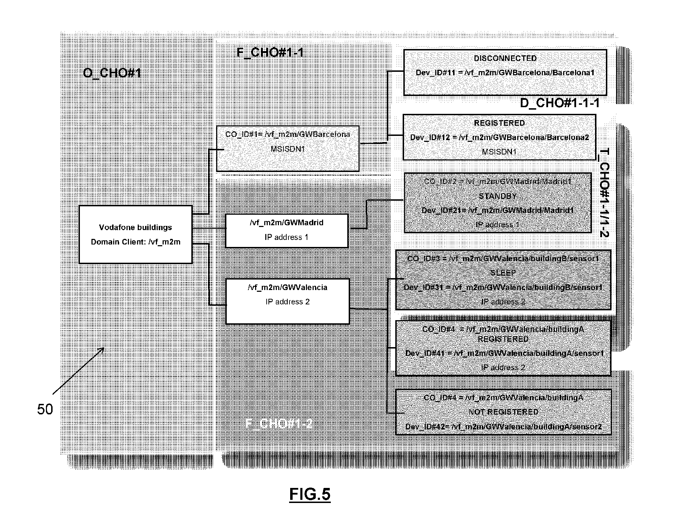

Figure 5 shows a virtual and overlapping structure of object organization for charging purposes, based on the naming and addressing procedure described before, which facilitates straightforward Data Brokerage functionality. From the example of Figure 5, it is possible to outline the main characteristics of this overlapping Charging Object structure 50:
- There are not holes in the structure. Any element in the provisioned database is assigned to a Charging Object (CHO).
- Any Charging Object is identified with a unique Charging Object ID (CHO_ID).
- It is really a virtual structure. If the messaging unit of a generic M2M Service Enablement Platform is the Connected Object (CO), a Third Party Customer 3 subscribed to a CHO made by aggregation of, for instance, two COs, receives two messages. This is something that the Owner Customer 2 must take into account when defining its Charging Objects. Additionally, the Charging Object structure is decoupled of the CO reach-ability, meaning that it is required the Registration of the individual CO, not of the CHO. A CHO is reachable if and only if all of its constituent COs are reachable.
- It is possible to establish a hierarchy of Charging Objects. All the provisioning database elements are part of a CHO, but those individuals CHOs can be Children or Parent, in a structure very similar to that defined in the Object Oriented Programming theory. The assigned CHO_ID reflexes this relationship, in order to keep the principle of understandable naming required in a generic M2M Service Enablement Platform.
- As a consequence of the previous point, it can be applied a proper concept of Inheritance, with scope in the Data Access Rules defined and charging scheme applicable to each individual CHO. This is also a consequence of the recommendation to apply the Data Access Rules to the Charging Object Structure defined, instead of applying it to individual CO.
- The proposed structure is more flexible because it facilitates the whole system reconfiguration in the case that additions of new COs, or changes in current provisioned COs, may be required by the Owner Customers 2.

The Charging Object structure 50 can be mapped to the Connected Objects implemented in the provisioning tree 40 by defining different types of CHOs configured by the Owner Customer 3. Three types of CHOs are proposed and described as follows:
1) Fundamental Charging Object (F_CHO)

In the case of configuring a first level Charging Object, which is defined as a Fundamental Charging Object (F_CHO), the information that must be provided by the Owner Customer comprises at least the following data:
- A tentative CHO_ID.
- An indication that the CHO is a Fundamental one.
- The list of the constituent Connected Object(s) of that CHO.
- The Data Access Rules for that CHO. It cannot be left empty.
- The Charging Scheme for that CHO. It cannot be left empty.

When the Provisioning functional entity of a generic M2M Service Enablement Platform receives the previous F-CHO configuration request from the Owner Customer 2, the uniqueness of the proposed CHO_ID is validated obtaining a positive or negative response. If the response is negative, the Provisioning functional entity allows the Owner Customer 2 for requesting a totally new proposal of CHO_ID. It is a prerogative of the Owner Customer 2 to accept or reject it. If this new proposal is accepted by the Owner Customer 2, a new CHO_ID is assigned into the Provisioning Database (provisioning tree 40), and the exposition level corresponds to the CO, in the list of constituent COs, at the highest level provisioned in the provisioning tree 40. For instance, in the example outlined in Figure 5, if the list includes CO_ID#2, CO_ID#3 and CO_ID#4, this means that CHO_ID#1-2 is a Fundamental CHO and it is linked to the level market by these three COs, which is the Tier Level 3 for that example. This is a key characteristic of the Fundamental CHOs: they are always linked to a real CO_ID level defined in the Database.

### 2) Derived Charging Object (D_CHO)

The Owner Customer 2 can define a second level of Charging Object, which is defined as a Derived Charging Object (D_CHO). In that case, the information that must be provided by the Owner Customer 2 comprises at least the following data:
- A tentative CHO_ID. It can be set to a wildcard meaning that the Owner Customer 2 requires the system to provide that ID.
- An indication that the CHO is a Derived one.
- An indication of the origins of that Derived CHO. It can be:
   ➢ Purely derived from one or more Fundamental CHOs.
   ➢ Purely derived from others Derived CHOs.
   ➢ Derived from a mix of both.
- The list of the Fundamental CHO the Derived CHO is derived from.
- The list of the others Derived CHO, from which the Derived CHO is composed.
- The list of the constituent Connected Objects or parts of a Connected Object the Derived CHO is composed of. If the Derived CHO includes parts of a CO, two further indications are included in order to distinguish both sets of constituents, those which are completed CO and those which are part of a CO. This distinction is required in order to optimize the look up procedures whereby the Provisioning Database finds out both sets of constituent.
- The Data Access Rules for that CHO. It can be left empty
- The Charging Scheme for that CHO. It can be left empty.

If the Access Rules and Charging Scheme fields are left empty, the inheritance rules, which are described later in further detail, are applied in order to bring about a valid set for those parameters.

When the Provisioning functional entity of a generic M2M Service Enablement Platform receives the previous D-CHO configuration request from the Owner Customer 2, the Provisioning functional entity validates the uniqueness of the proposed CHO_ID and replies with a positive or negative response. There are some rules for creating a Derived CHO_ID based on its Fundamental CHO_ID. If those rules are followed by the Owner Customer 2, the response is positive; otherwise, it is negative. If the response is negative, the Provisioning functional entity can include a proposal for a CHO_ID to the Owner Customer 2, but it is a prerogative of the Owner Customer 2 to accept or reject it. In any case, it is required a new request from its side with this proposal or a completely brand new CHO_ID. Additionally, in this case the Owner Customer 2 fulfils this field with a wildcard; the meaning is that the Owner left the responsibility to the Provisioning functional entity to derive a valid CHO_ID. For instance, in the example outlined in Figure 5, if the list includes CO_ID#1 and the Fundamental CHO is CHO_ID#1-1, the CHO_ID#1-1-1 is created as a Derived CHO.

The definition of a Derived CHO based on a complete Connected Object (or a subset of a CO) is clear and neat, and introduces a powerful characteristic: The second level of CHOs in the hierarchy avoids reconfiguring the whole provisioned record for configuring new Connected Objects assigned to the newly desired partition of the original Connected Object. The only drawback can be that this requires from the Owner Customer 2 a further and deeper knowledge of the identities assigned to every asset (i.e. the lowest levels) in its organization. That knowledge is guaranteed by the generic M2M Service Enablement Platform as well, but it is up to the Owner Customer 2 to balance if possibly, defining additional Connected Objects, previous to the building of the Charging Object Structure.

### 3) Organization Charging Object (O_CHO)

There is a third type of Charging Objects which are defined as Organization Charging Object (O_CHO). The main characteristics of this type of Charging Objects are that an Organization CHO is an abstraction of Fundamental CHOs and more than one level of O_CHOs can be added. Therefore, the minimum information that must be provided by an Owner Customer 2 in order to request the creation of a O_CHO comprises at least the following data:
- A tentative CHO_ID.
- An indication that the CHO is an Organization one.
- An indication of the composition of that Organization CHO. It can be:
   ➢ Purely made by more than one Fundamental CHOs.
   ➢ Purely made by others Organization CHOs.
   ➢ Made of a mix of both.
- The list of the Fundamental CHO the Organization CHO is composed of.
- The list of the others Organization CHO the current Organization CHO is composed of.
- The Data Access Rules for that CHO. It can be left empty
- The Charging Scheme for that CHO. It can be left empty.

The Organization Charging Object adds a level of abstraction to the Charging Object Structure that is required for the Owner Customer 2 for customizing the charging structure.

From the classification of CHOs outlined above, note that the key Charging Objects are the Fundamental ones, because these CHOs are the ones which link the virtual structure defined by the Charging Object approach and the real one composed from the Connected Objects into manageable DataStreams. Therefore, the F_CHOs must be the first ones defined by the Owner Customer 2 in the case of requesting subscription service. Additionally, it is worth pointing out that the F_CHOs are the only ones for which providing the Access Rules and Charging Schemes is mandatory.

In an alternative procedure for configuring the Charging Object structure, the Owner Customer 2 starts asking the Provisioning Management Functionality of a generic M2M Service Enablement Platform the provision of a Organization CHO, providing at least the following information:
- A tentative CHO_ID.
- An indication that the CHO is an Organization one.
- An indication that this Organization CHO has not any hierarchical structure defined so far. This indication is a request for the system to build this structure by itself.
- The list of the CO this Organization CHO is composed of.
- The Data Access Rules for that CHO. It cannot be left empty
- The Charging Scheme for that CHO. It cannot be left empty.

At the reception of this request, the Provisioning Management Function creates the required Fundamental CHO and communicates its provision to the Owner Customer 2 in response to the request.

For instance, in the example outlined in Figure 5, if the Owner Customer 2 asks for provisioning an Organization CHO (can be called Parent CHO), CHO_ID 1, which list of CO includes CO_ID#1, CO_ID#2, CO_ID#3 and CO_ID#4, the Provisioning Management Function creates that O_CHO. After that, the Owner Customer 2 may additionally request the creation of two Fundamental CHOs (as the Children of that Parent CHO); i.e., CHO_ID#1-1 and CHO_ID#1-2 linked to CO_ID#1 and CO_ID#2, CO_ID#2i3 and CO_ID#4 respectively. The responsibility of creating Derived CHO is for the Owner Customer 2.

Once a given Charging Object structure is adopted by the Owner Customer 2 to organize and manage its data; it needs to define data access rules and charging scheme applicability for Third Party customers 3 interested in consuming those data. Therefore, the finally defined Charging Object structure is the one exposed by the Owner Customer 2 for the subscriptions and data requests from the Third Party customers 3.

As it has been described and shown in Figure 5, each CHO can be a child of at least another one CHO, and/or each CHO can be the Parent of at least another one CHO. Therefore, there are not holes in the structure, and an inheritance approach, as the one defined in the Object Oriented Programming, can be straightforward implemented for making quicker the whole system reconfigurations after changes or updates.

The features that Charging Objects can inherit are initially two: Data Access Rules and Charging Schemes. This does not preclude that more features may be added.

### I) Data Access Rules

The Owner Customer 2 can define the Data Access Rules for each of the created CHOs in order to state who can access to the data and in which conditions.

The mechanism for authorization rules is based on mixing two types of authorization modes:
- Indirect Authorisation by which the Owner Customer 2 authorizes access to the data included in a Charging Object before anyone requested it.
- Direct Authorization by which the Owner Customer 2 authorizes that access based on a specific request.

The data access rules are managed based on either individual customers or group of customers through a White List, or to the general public through a Default List. Those customers who are not allowed to access a specific CHO are put in a Black List.

The data access rules defined by the Owner Customer 2 are stored in a Provisioning Database entity (the actual data that are authorized to deliver is defined in a specific CHO), linked to the data being authorized to deliver, and with other information (Third Party Customers IDs in the White-List, Third Party Customers IDs in the Black Lists, etc.), which is also resident in the Provisioning database and is needed to complete the required information.

### I.1) Indirect Authorization

In the Indirect Authorization model, the Owner Customer 2 may consider (before any individual request) the creation of individual authorizations, group authorizations or default authorization. It is also possible to define authorised/unauthorised users, managed by means of White/Black Lists. In practical terms, the Owner Customer 2 has users grouped in Contact Lists (clients, partners, etc.). In that case, it is worth to allow the Owner Customer 2 to grant/block access directly to a whole Contact List to a specific CHO. In that case, the Owner Customer 2 specifies the set of CHOs to be associated to a Contact List. There may be more than one CHO per Contact List. This Contact List is copied to each White List of the requested CHO, transparently with respect to the Owner Customer 2. Any Third Party Customer 3 included in a White List of a specific CHO gets immediate access to the data under the CHO without further interaction with the Owner Customer 2. Other Third Party Customers 3 outside of the White List willing to access to a specific CHO must follow an authorization policy defined by the Owner Customer 2 (e.g., immediate rejection by the Third Party Customers 3 or explicit request from the Third Party Customer 3 to the Owner Customer 2). When a Third Party Customer 3 has been authorized individually (by Indirect Authorisation), and is also authorized via a Contact List, then the individual authorization has priority over the Contact List authorization, i.e. the individual's CHO overrides the CHO of the Contact List.

For individual authorization, the Owner Customer 2 may desire to be notified if the individual authorized Third Party customer 3 is requesting other data set than the one for which was indirectly authorized. In this case, direct authorization must be applied.

The Owner Customer 2 may specify a list of default CHOs exposed. These CHOs are available for all customers who do not belong to a Black List.

### 1.2) Direct Authorization

If the Owner Customer 2 does not indirectly authorize a Third Party customer 3 in any of the above described ways (neither individual, nor Contact List Indirect Authorization, and the requested CHOs are not included in a Default List); the Platform Data Storage entity notifies the Owner Customer 2 about additional data set requests and asks for explicit authorization. This notification contains the Third Party Customer-ID and the list of additional requested CHOs that are currently not authorized.

In any case, for Indirect or Direct Authorization, the Owner Customer 2 defines the Data Access Rules for the CHOs, at least for the Fundamental CHOs, which has exposed in the White, Black and Default Lists.

### II) Charging Schemes

A Charging Scheme is the charging treatment that must be applied to a Charging Object. The Owner Customer 2 links each defined CHO to a specific charging package that guarantees the provisioning of the required services.

The Data Brokerage functionality allows the Owner Customer 2 to have a full control of its collected data, including which data are kept for its own applications usage and which can be exposed for trading with Third Party Customers' applications, doing a business from the selling of its owned data. This is really a differentiating functionality of this Platform, which may be linked to some others, for example, the provision of Quality of Service Mechanisms for Data Transactions into the platform and for the delivery of an End-to-end Service (e.g. data prioritisation; Real time data; guarantee delivery-urgent data; Delay tolerant data; Connection less data; Best effort data etc). A generic M2M Service Enablement Platforms can treat those differentiating capabilities by applying different charging packages, or schemes, to each data set aggregated in a CHO. For example, it can be assumed that a set of differentiating capabilities are grouped in a Premium Charging Scheme. For the rest of common Platform capabilities (e.g. Device Management, Plug & Play Device Connection, Data Storage, Processing and Routing Services, Integration to Backend Customer IT Systems, Real Time Event Processing, etc) a Basic Charging Scheme can be applied.

The Charging Scheme is one of the characteristics of a CHO, as well as the Data Access Rules, which can be inherited to other CHOs, in accordance to the following rules of Inheritance:
The rules of Inheritance for the Data Access Rules depend on the type of inheritance, which can be Direct or Reverse.

The CHO Direct Inheritance applies on Data Access Rules as follows:
1. The Access Rules stated for a CHO are inherited by all the CHO derived from that CHO. That is, the Access Rules defined for a Parent CHO are inherited by its Children CHOs, whatever was the nature of the CHOs (Organization, Fundamental or Derived). The assignment of those Inheritance Access Rules is immediate after the CHO definition.
2. Any specific Access Rules stated for a CHO, overrides the inherited Access Rules of that CHO and must be done explicitly by the Owner Customer 2.
3. In the case of a CHO derives from two or more CHOs (Parents CHO), the following Inheritance rules apply:
   ○ The inherited White List is implemented by adding all the contents of the Parents' White Lists.
   ○ The inherited Black List is implemented by adding all the contents of the Parents' Black Lists.
   ○ After a checking process of inherited White/Black Lists, the common Third Party Customers in both inherited lists are removed from the inherited White List.

These simple rules allows a very fast assignment of new Access Rules to a newly defined CHO or a very rapid reconfiguration of the whole system in the event of changes implemented by the Owner Customer 2.

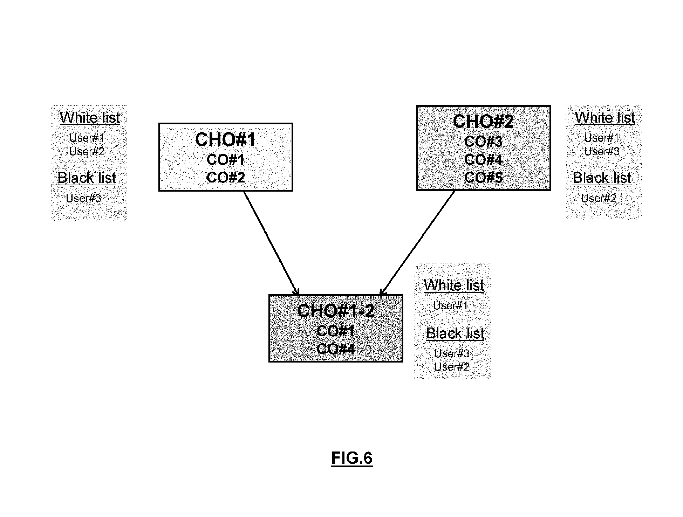

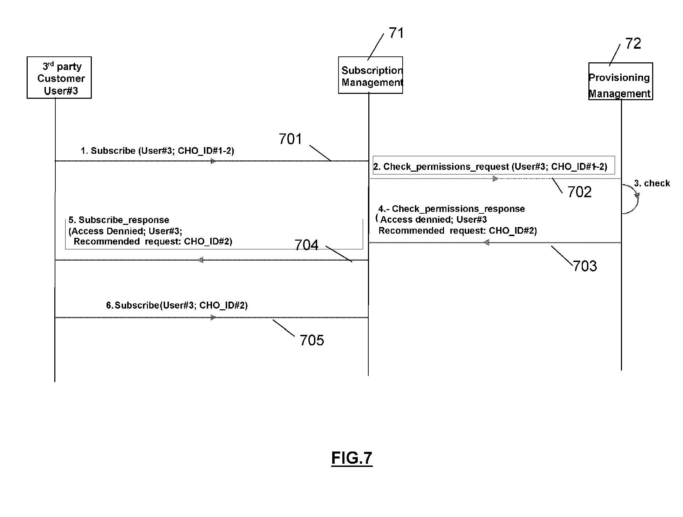

Figure 6 implements an example of how Direct Inheritance applies to the data Access Rules of Charging Objects. The example assumes that User#3 is a particular Third Party Customer mainly interested in the data allocated in access to a certain Connected Object CO#4. This particular Third Party Customer, User#3, may not know in advance if it has indirect access permissions by the Owner Customer 2. There are two subscription options based on what the Owner Customer 2 has exposed: It may request a subscription to CHO#1-2 or to CHO#2. Each defined CHO, CHO#1, CHO#1-2 and CHO#2, has associated lists of Users, 61, 62, 63 respectively, distinguishing White and Black lists for authorised and unauthorised users. If User#3 requests a Direct Authorisation for subscription to CHO#1-2 (because it is only interested only in one Connected Object that eventually may be associated to a cheaper subscription), User#3 receives a Denied Permission message, because User#3 is included in the Black List for this specific CHO, as shown in Figure 6. However this rejection is inherited from the "other side" from which the CHO#1-2 is composed of, and in that case, an algorithm can be implemented in the generic M2M Service Enablement Platform to recommend User#3 to request a Direct Authorisation for the other option (i.e. for CHO#2). This algorithm is a consequence of the Inheritance rules explained before and causes the implementation of an "enriched rejection" message, shown in another example illustrated in next Figure 7.

Figure 7 summarizes a workflow of messages possible in the scenario of Direct Inheritance applicability described previously in Figure 6. The Third Party Customer User#3 sends a subscription request 701 to the Subscription Management Function entity 71, which in turn asks the Provisioning Management Function entity 72 for checking 73 the permissions of said Third Party Customer User#3. In this example, the subscription is requested for CHO#1-2, for which the Third Party Customer User#3 has no permission, so the Provisioning Management Function entity 72 sends a rejection message 703 as a check permission response to a check permission request 702 from the Subscription Management Function entity 71. This "enriched" rejection message 703 of the example within a subscription response message 704 informs the Third Party Customer User#3 that he/she has not a granted access to the data aggregated in CHO#1-2, and also informs that, in this example, the Third Party Customer User#3 has a granted access to the data under CHO#2, which has been discovered by the Provisioning Management Function entity 72 after having climbing up in the hierarchical structure of the inheritance. Hence, the informed Third Party Customer User#3 can request a subscription to CHO#2.

On the other hand, since the Fundamental CHOs have been defined as the only ones for which it is mandatory to explicitly assign a set of Data Access Rules, some extra rules for inheritance are provided for covering the case of defining Organization CHOs, without explicitly provisioning the Data Access Rules set for those new up-in-the-tree CHOs. This kind of inheritance is here called Reverse Inheritance and in that case the following principles apply:
○ The inherited White List is implemented by adding all the contents of the Children White Lists.
○ The inherited Black List is populated only with commons names in all the Children Black Lists.
○ The common names in both inherited lists, if any, are removed from the inherited White List.
○ If after having applied Reverse Inheritance, any Children Access Rules is removed (for any reason), then a new set of Access Rules can be provisioned by Direct Inheritance.

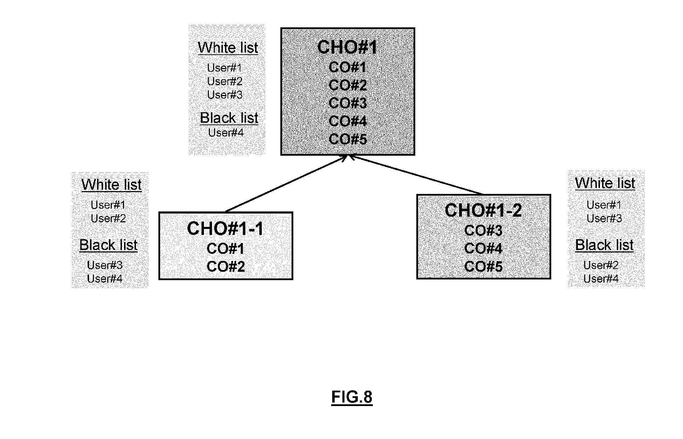

An example of applicability of reverse inheritance principles is shown in Figure 8, where the CHO#1 is an Organizational CHO created as an abstraction from two Fundamental CHOs, which are: CHO#1-1 and CHO#1-2. Then, CHO#1 inherits the Data Access Rules from those F-CHOs, CHO#1-1 and CHO#1-2, accordingly to the principles stated above, and in consequence all Users, User#1, User#2 and User#3, having access to the two F-CHOs, CHO#1-1 and CHO#1-2, has granted access to the O_CHO, CHO#1.

The White and Black lists, 81, 82, 83, are sent to the M2M Service Enablement platform at the very moment of the creation of the CHO. If the CHO is a Son of one or more CHOs, these lists can be left empty because they are fulfilled with the data from the Parent(s) CHO(s) by applying the described Inheritance Rules.

Regarding the Charging Scheme, the rules of Inheritance (Direct or Reverse) are the same that those stated for the Data Access Rules, with the following considerations:
1. If a CHO is derived from two or more CHOs (Parents), the following rules for Direct Inheritance apply:
   ○ The Basic Scheme is more restrictive than the Premium one.
   ○ In this scenario, the Data Brokerage functionality gives value to the Owner Customer 2 providing Privacy of its data, therefore the Basic Scheme is always preeminent in the inheritance; which means:
      ■ A combination of Parent Charging Schemes of [Basic + Premium] causes a Direct Inheritance of Basic Scheme.
      ■ Only the combination [Premium + Premium] causes an inheritance of Premium.
   ○ If more Premium levels are defined in the future, the same approach of giving pre-eminence to the most restrictive one is applied.
2. In the case of a O_CHO aggregating two or more others CHOs (Children), the following rules for Reverse Inheritance apply:
   ○ The Basic Scheme is more restrictive than the Premium one.
   ○ In this scenario, the Data Brokerage functionality gives value to the Owner Customer 2 providing the trading capability (most profitable approach), therefore Basic Scheme must be assigned to the lowest level as possible in the hierarchy, meaning that it must be the Owner Customer 2 who explicitly restricts its own business. That is:
      ■ A combination of Children Charging Schemes of [Basic + Premium] causes a Reverse Inheritance of Premium Scheme.
      ■ Only the combination [Basic+Basic] causes an inheritance of Basic Scheme.
   ○ If more Premium levels are defined in the future, the same approach of giving pre-eminence to the most profitable one is applied.

Thus, the Owner Customer 2 can decide to change the tariff profile at any level of the Charging Object Structure, being confident that this decision is cascaded along the CHO Structure accordingly by using the described Inheritance Rules and without further interaction or manual reconfiguration from the customer's side.

The Charging Object Structure accepted by the Owner Customer 2 is the structure exposed to the outside world, having each defined Charging Object assigned a Charging Object ID (CHO_ID), independently of the nature of the CHO (Fundamental, Derived or Organization). The assigned CHO_ID keeps the same type of requirement imposed to the Connected Objects or other provisioned identities of elements in the generic M2M Service Enablement platform, which can be summarized by the following characteristics:
- Unique.
- Human readable.
- As much as possible, unambiguously indicating which data it is pointing out.

The Owner Customer 2 is in principle free to assign whatever CHO_ID. The responsibility of the Provisioning functional entity of the generic M2M Service Enablement Platform is to check for the uniqueness of such assigned ID. In order to minimize the number of interactions for this checking, the CHO_ID is derived from the Tier 1, Tier 2 or Tier "n" ID already defined in the Provisioning tree 40. For instance, returning to the example of Figure 4, the Fundamental CHO called CHO_ID#1-1 can be mapped to the CO_ID#1 stated with the following naming schema as: /vf_m2m/GWBarcelona. In addition a possible Derived CHO can be CHO_ID#1-1-1 mapped to one of the devices forming part of that CO#1, which for example can be stated as: /vf_m2m/GWBarcelona/Barcelona1.

The described Charging Object Structure can optimise the Data Brokerage service capability in a really simple way by using another kind of Charging Object: the Temporary Charging Object (T_CHO). In the proposed CHO Structure, the Data Brokerage functionality always gives priority to the CHO Structure customization decided by the Owner Customer 2. The Third Party Customer 3 is mainly passive and only has the rights to subscribe and get access to the data exposed by the Owner Customer 2 in a set of CHOs, in the way and grouping format that this Owner Customer 2 has decided. That means that a Third Party Customer 3 may have access to some data that it may not be interested in or Third Party Customer 3 needs to request subscriptions to several CHOs because its actual interest is split in, e.g., two different CHOs by an Owner Customer's decision. This CHO Structure is provisioned by the Owner Customer 2 and must be the only permanent in the time, but it is possible to have a flexibility window provided by the creation of a Temporary Charging Object (T_CHO). The Owner Customer 2 is provided with the following policies for processing a request for the creation of a T_CHO:
1. Do not accept: The Owner Customer 2 is not going to accept any T_CHO Creation Request neither wants to be disturbed with this request. The Third Party Customer 3 receives a denied permission for this request.
2. Do not accept, except if the Third Party Customer 3 is registered in its Contact List: The Owner Customer 2 accepts the request and the response to said Third Party Customer 3 is positive, only if the request is incoming from an accepted, selected group of contacts.
3. The request may be accepted on a case by case basis: The Owner Customer 2 may accept the request, upon revision, and the response may be either positive or negative depending on the result of said revision:
   o If positive, a Temporary CHO for an established period of time is created by the Owner Customer 2, published and exposed for subscriptions. It is not exclusive for the Third Party Customer 3 requesting its creation. After a given time period defined by the Owner Customer, 2 the Temporary CHO is automatically removed.
   o If negative, the Third Party Customer 3 receives a denied permission for this request.
4. When accepted, the Owner Customer 2 may decide which Data Access Rules and Charging Scheme are applicable to the Temporary CHO. In other case this T_CHO receives these features, Data Access Rules and Charging Scheme, by means of the Inheritance Rules described before, ensuring a minimum interaction with the Owner Customer 2.

Returning to the example shown in Figure 6, it is possible to explain the concept of a Temporary CHO. In this example, the User#3 was only interested in CO#4, but it had to be subscribed to CHO#2, which includes CO#3, CO#4 and CO#5, in order to overcome a first inherited barring and get, finally, its highly desired data. If User#3 can ask the Owner Customer 2 for the creation of a customized and temporal CHO, User#3 realizes that an optimal solution is to request just for one T_CHO including CO#4.

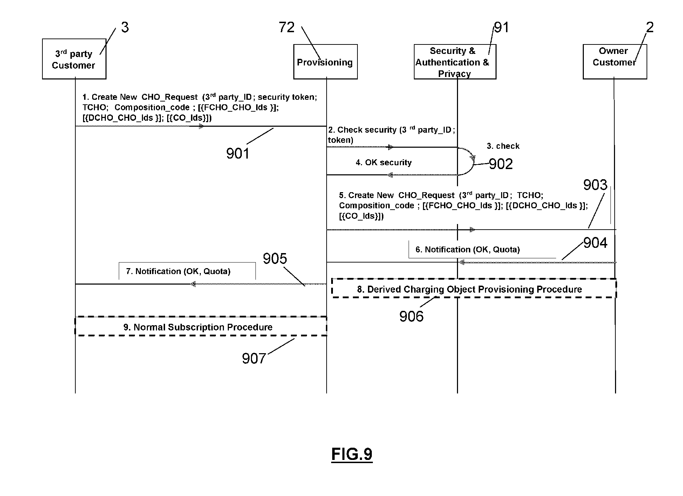

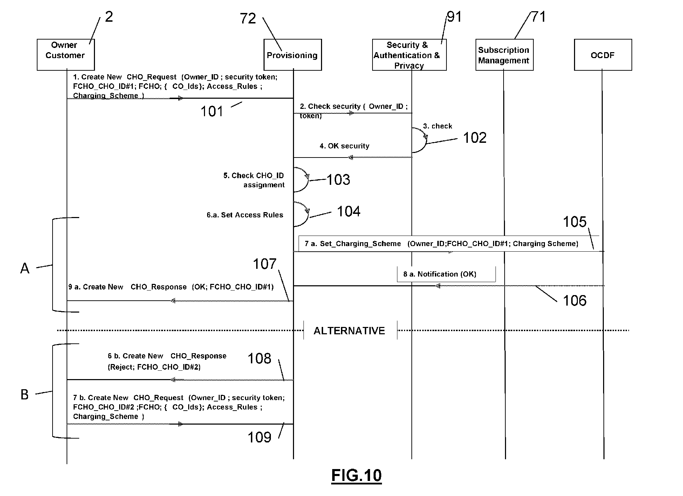

Figure 9 outlines the procedure whereby a Third Party Customer 3 requests, 901, 903, the Owner Customer 2 through the services offered by the Provisioning Management Function entity 72 to create a Temporary CHO TCHO, after having authenticated the Third Party Customer 3 and checked the security and privacy profile 902 by the Security Authentication & Privacy functional Entity 91, implemented in a security module for checking the customer credentials required to grant access to the main part of a generic M2M Service Enablement Platform. In the response 904, 905, the Owner Customer 2 includes the granted quota (time, data volume, etc.) for that Temporary CHO. When this quota is run out, the Temporary CHO is deleted. The creation of a Temporary CHO does not involve implicitly accepting the subscription of the Third Party Customer 3 to any of the permanent exposed CHOs by an Owner Customer 2. Therefore, this Third Party Customer 3 must issue a CHO provisioning procedure 906 and normal procedure of subscription 907 for a specific permanent CHO (Organisation, Fundamental or Derived CHO) as described below respectively in the following Figures 10-12.

Figure 10 illustrates the procedure of provisioning a specific Fundamental Charging Object FCHO and shows the flow of messages when an Owner Customer 2 requests to a generic M2M Service Enablement Platform for the creation 101 of the Charging Object FCHO, specified by an identifier: FCHO_CHO_ID#1, considering the two possible cases: A) the request is accepted, B) the request is rejected. First, the Provisioning management function entity 72 asks the Security and Authentication function 91 for the authentication, security and privacy checking 102 of the Owner Customer 2. Having the Owner Customer 2 authenticated, then the Provisioning management function entity 72 checks the identity of the requested CHO 103. If the assignment of the CHO_ID is OK, the Provisioning management function entity 72 sets up the Data Access Rules 104 accepted in the record corresponding to the verified CHO_ID and also informs the Object Charging Data Function OCDF about the Charging Scheme 105 that has been granted for that CHO. If the Object Charging Data Function OCDF can accept the request, it notifies 106 that the request is finally accepted to the Provisioning management function entity 72, which in turn sends a positive response 107 to the Owner Customer 2. Otherwise, in the case B) that the tentative CHO_ID request of the Owner Customer is not accepted, no acknowledgment is received by the Provisioning management function entity 72 from the Object Charging Data Function OCDF but a negative response 108 is received by Owner Customer 2 the from the Provisioning management function entity 72. In that case B), the Owner Customer 2 can issue another request 109 for a Fundamental CHO using a new identity of FCHO or the CHO_ID proposed, FCHO_CHO_ID#2, by the Provisioning management function entity 72.

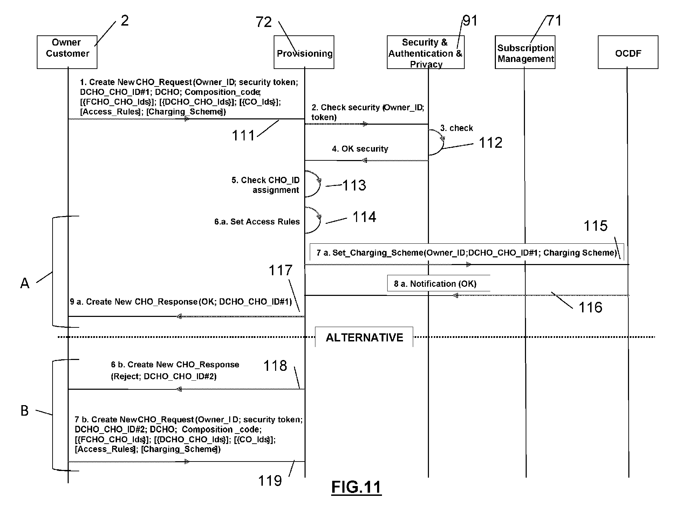

Figure 11 illustrates the procedure of provisioning a specific Derived Charging Object DCHO and shows the flow of messages when an Owner Customer 2 requests to a generic M2M Service Enablement Platform for the creation 111 of the Charging Object DCHO, specified by an identifier: DCHO_CHO_ID#1, considering the two possible cases: A) the request is accepted, B) the request is rejected. First, the Provisioning management function entity 72 asks the Security and Authentication function 91 for the authentication, security and privacy checking 112 of the Owner Customer 2. Having the Owner Customer 2 authenticated, then the Provisioning management function entity 72 checks the identity of the requested CHO 113. If the assignment of the CHO_ID is OK, the Provisioning management function entity 72 sets up the Data Access Rules 114 accepted in the record corresponding to the verified CHO_ID and also inform the Object Charging Data Function OCDF about the Charging Scheme 115 that has been granted for that CHO. The procedure is very similar to the one described for provisioning of a Fundamental CHO, but note that for the creation of a Derived CHO, adding parameters for setting Data Access Rules 114 and the Charging Scheme 115 is optional because the Inheritance Rules for these features apply from the FCHO which the DCHO derived.

In the first case A) shown in Figure 11, the Object Charging Data Function OCDF accepts the request and notifies it 116 to the Provisioning management functional entity 72, which in turn sends a positive response 117 to the Owner Customer 2. Otherwise, in the case B) that the tentative CHO_ID request of the Owner Customer is not accepted, no acknowledgment is received by the Provisioning management function entity 72 from the Object Charging Data Function OCDF but a negative response 118 is received by Owner Customer 2 the from the Provisioning management function entity 72. In that case B), the Owner Customer 2 can issue another request 119 for a Derived CHO using a new identity of DCHO or the CHO_ID proposed, DCHO_CHO_ID#2, by the Provisioning management function entity 72.

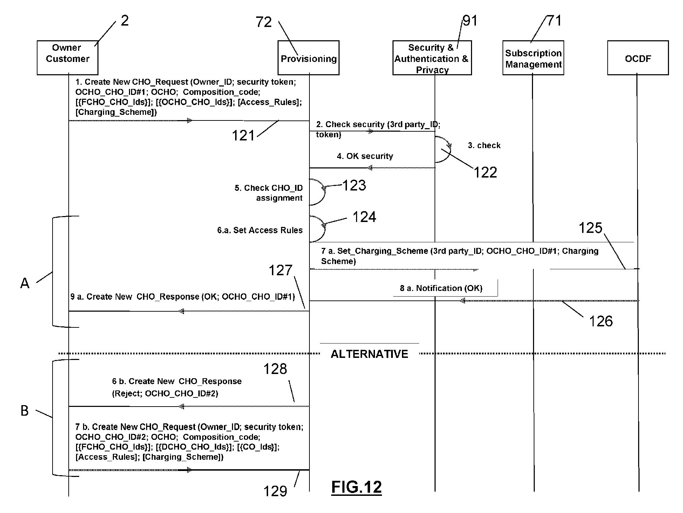

Figure 12 illustrates the procedure of provisioning a specific Organization Charging Object OCHO and shows the flow of messages when an Owner Customer 2 requests to a generic M2M Service Enablement Platform for the creation 121 of the Charging Object OCHO, specified by an identifier: OCHO_CHO_ID#1, considering the two possible cases: A) the request is accepted, B) the request is rejected. First, the Provisioning management function entity 72 asks the Security and Authentication function 91 for the authentication, security and privacy checking 122 of the Owner Customer 2. Having the Owner Customer 2 authenticated, then the Provisioning management function entity 72 checks the identity of the requested CHO 123. If the assignment of the CHO_ID is OK, the Provisioning management function entity 72 sets up the Data Access Rules 124 accepted in the record corresponding to the verified CHO_ID and also inform the Object Charging Data Function OCDF about the Charging Scheme 125 that has been granted for that CHO. Note that, as in the case of requesting a Derived CHO and unlike the case of the Fundamental CHO, adding parameters for setting Data Access Rules 124 and the Charging Scheme 125 is optional because the Inheritance Rules for these features apply from the FCHO which the OCHO derived.

In the first case A) shown in Figure 12, the Object Charging Data Function OCDF accepts the request and notifies it 126 to the Provisioning management functional entity 72, which in turn sends a positive response 127 to the Owner Customer 2. Otherwise, in the case B) that the tentative CHO_ID request of the Owner Customer is not accepted, no acknowledgment is received by the Provisioning management function entity 72 from the Object Charging Data Function OCDF but a negative response 128 is received by Owner Customer 2 the from the Provisioning management function entity 72. In that case B), the Owner Customer 2 can issue another request 129 for a Derived CHO using a new identity of DCHO or the CHO_ID proposed, OCHO_CHO_ID#2, by the Provisioning management function entity 72.

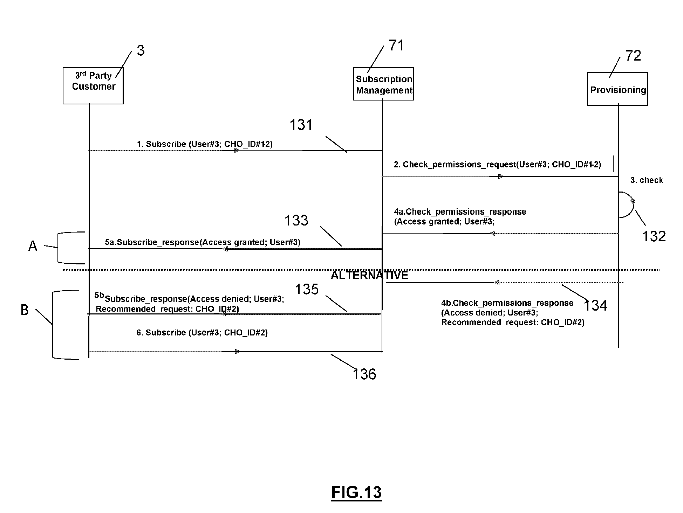

Figure 13 shows the normal procedure of subscription to a specific CHO (Organisation, Fundamental or Derived CHO). A Third Party Customer 3 sends a request for subscription 131 to the Subscription Management Function entity 71, which in turn first asks the Provisioning Management Function entity 72 to check 132 the permissions of this Third Party Customer 3, identified by User#3 in the example, to access the requested CHO, identified by CHO_ID#1-2. If the User#3 has permissions to access said CHO_ID#1-2, case A), the respective responses 133, 134 to the Subscription Management Function entity 71 and the Third Party Customer 3 inform that the access is granted. Otherwise, case B), a rejection response 135 is received by the Subscription Management Function entity 71, which sends a response 136 informing the Third Party Customer 3 that the access is denied for the requested CHO, CHO_ID#1-2, but permissions can be granted to an alternative CHO, CHO_ID#2, proposed by the Provisioning Management Function entity 72.

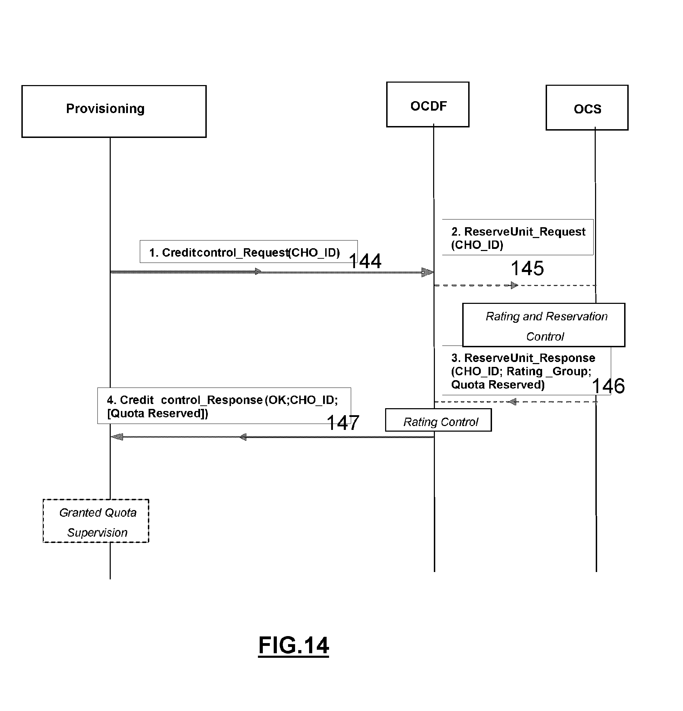

Figure 14 illustrates an example of the process to implement the Connected Object Based Charging Policy by means of the Object Charging Data Function entity, OCDF. Firstly, it is a precondition that the Owner Customer 2 (e.g. following the process described in Figure 13) has provided granted access to a given Third party Customer 3 for subscription to a specific CHO_ID, based on a specific charging policy which is already provisioned. Secondly, it is a precondition that this Third party Customer 3 is aware of this charging policy and agreed it before summit any subscription to that CHO_ID. Thirdly, it is assumed that this Third Party Customer 3 is also a customer of a Telecommunications Service Provider owning an Online Charging System, OCS. In this case, there must be an interaction between OCDF and OCS entities of the service provider to correlate Charging Object access attempts with the information used in the OCS to charge the customers. For example, a credit control request 144 for the granted CHO_ID is issued by the Provisioning entity 141 against the OCDF. The Provisioning entity 141 monitors the usage of a granted quota 142 according to instructions returned by the OCS, which controls credit-reservation and rating 148. The services can be grouped into rating groups. The OCDF entity requests a correspondent Rating group 145 (all the customers belonging to this group have the same charging policy defined) for that CHO_ID, by means of interacting with the OCS entity, which answers affirmatively with the provision of a granted usage quota 146 previously reserved for the rating group. The OCDF entity performs rating control 143, i.e., control of the determination of the cost of the service event, based on the reserved quota. Finally, OCDF replies affirmatively 147 to the initial credit control request from the Provisioning entity 141 informing about the granted quota that has been reserved. Based on both the charging policy provisioned and this workflow, every time a Third party application attempts to access information on a given CHO_ID, then it is charged based on a reserved quota which might be dependant on, for example, the volume of connected devices per charging object.

Note that in this text, the term "comprises" and its derivations (such as "comprising", etc.) should not be understood in an excluding sense, that is, these terms should not be interpreted as excluding the possibility that what is described and defined may include further elements, steps, etc.

### SUMMARY OF EXAMPLE FEATURES

The following numbered statements provide summaries of example features in accordance with implementations of the invention:
1. - A method for managing data in M2M systems, whose customers are at least an owner customer 2 (first entity) owning M2M devices and a third party customer 3 (second entity) requesting access to data associated with the M2M devices of the owner customer 2, characterized by comprising the steps of:
   - registration of the owner customer 2 and the third party customer 3 in a provisioning database belonging to a M2M system;
   - definition by the owner customer 2 of at least a connected object, which is associated with data from either a single M2M device or a set of M2M devices of the owner customer 2, in the provisioning database;
   - subscription of the owner customer 2 to every connected object defined by the owner customer 2 by validating a unique unambiguous identity of each connected object in the provisioning database;
   - publication to the third party customer 3 by the owner customer 2, in the provisioning database, of at least a specific application object, which consists of a single connected object, a certain part of a single connected object or an aggregation of multiple connected objects, the publication comprising an association of the specific application object with data from the connected objects defining said specific application object;
   - definition by the owner customer 2, in the provisioning database, of data access rules for enabling the third party customer 3 to request subscription to a specific application object published to said third party customer 3.
2. - The method according to clause 1, wherein the specific application objects are published in the provisioning database according to hierarchical levels at which a fundamental specific application object starts a first level in the hierarchy, a derived specific application object is created from one or more fundamental specific application objects in a next hierarchical level and an organizational specific application object is created by aggregation of multiple fundamental specific application objects adding hierarchical levels.
3. - The method according to clause 2, wherein the data access rules are defined by the owner customer 2 mandatory for fundamental specific application objects.
4. -The method according to any of clauses 2-3, wherein the fundamental specific application object is linked to a unique unambiguous identity of one connected object.
5. - The method according to any preceding clause, further comprising creating temporarily in the provisioning database a temporary specific application object which is requested by the third party customer 3 with a mapping between the temporary specific application object and data associated with connected objects which is defined by said third party customer 3 and agreed with the owner customer 2.
6. - The method according to any preceding clause, further comprising accessing by the owner customer 2 to a specific stream of data associated with any of the connected objects defined by said owner customer 2.
7. - The method according to any preceding clause, further comprising granting by the owner customer 2 the access to data associated with an specific application object only if the third party customer 3 meets the data access rules defined in the provisioning database for requesting subscription to the specific application object.
8. - The method according to clause 7, wherein the granting of access to data by the owner customer 2 is performed before the third party customer 3 requests the data.
9. - The method according to clause 8, wherein the granting of access to data by the owner customer 2 is performed individually to said third party customer 3 and comprises specifying a list of data sets to be associated with the third party customer 3 in the provisioning database.
10.- The method according to clause 8, wherein the granting of access to data by the owner customer 2 is performed to a list of third party customers which said third party customer 3 belongs to and comprises specifying a list of data sets to be associated with the list of third party customers in the provisioning database.
11. - The method according to clause 7, wherein the granting of access to data by the owner customer 2 is performed by the owner customer 2 after the third party customer 3 requests the data only if the third party customer 3 meets the data access rules defined in the provisioning database for requesting subscription to the specific application objects associated with the requested data.
12. - The method according to any of clauses 6-11, wherein associating data with connected objects, specific application objects and third party customers comprising accessing by the provisioning database to a data storage database, in which data is stored and from which data is delivered when granted access, using respective unique unambiguous identities of the connected objects, specific application objects and third party customers.
13. - The method according to any preceding clause, wherein the specific application objects are for a specific application which is charging and the unique unambiguous identity of each defined connected object is used to correlate different sources of data related to charging.
14.- The method according to clause 13, further comprising correlating the data related to charging with specific application objects by an object charging data function entity, to which both the owner customer 2 and the third party customer 3 have access through the provisioning database.
15.- The method according to any preceding clause, wherein associating data with M2M devices comprises defining by the owner customer 2 a data stream which is a single data entity unambiguously associated with a connected object defined by the owner customer 2 in the provisioning database.
16.- A computer program comprising computer program code means adapted to perform the steps of the method according to any clauses 1-15, when said program is run on at least a programmable electronic device selected from a group of: a general purpose processor, a digital signal processor, a field-programmable gate array, an application-specific integrated circuit, a micro-processor and a micro-controller.

## Claims

1. A method for managing data in a machine-to-machine (M2M) system in which a first entity has one or more associated M2M devices and in which a second entity requests access to data associated with one or more of the said M2M devices, the method comprising:
defining at least one connected object, each connected object being associated with data from one or more of the said associated M2M devices and each connected object having a corresponding data stream being associated with the first entity;
providing to the second entity partial or full access to one or more of the data streams from the connected objects of the first entity in accordance with permissions set by the first entity.

2. A method according to claim 1, further comprising providing the first entity with access to its corresponding data streams.

3. A method according to claim 1 or claim 2, further comprising providing a provisioning database to retain information upon one or more of the following:
first entity identification, second entity identification, the relationship between the connected objects and the M2M devices, the relationship between the connected objects and their first entities, the permissions provided by the first entities to the second entities.

4. A method according to claim 3, wherein said providing to the second entity includes publication to the second entity of at least a specific application object, which comprises either: a single connected object, or a certain part of a single connected object or an aggregation of multiple connected objects; the publication comprising an association of the specific application object with data from the connected objects defining said specific application object.

5. A method according to claim 4, wherein the specific application objects are published in the provisioning database according to hierarchical levels in which a fundamental specific application object occupies a first level in the hierarchy, a derived specific application object is created from one or more fundamental specific application objects in a second hierarchical level and an organizational specific application object is created by aggregation of multiple fundamental specific application objects in one or more further hierarchical levels.

6. A method according to claim 5, wherein the fundamental specific application object is linked to a unique unambiguous identity of one connected object.

7. A method according to any of claims 4 to 6, further comprising creating temporarily in the provisioning database a temporary specific application object on request of the second entity, said creating including a mapping between the temporary specific application object and data associated with connected objects which is defined by said second entity and selectively permitted by the first entity.

8. A method according to any of claims 4 to 7, further comprising granting by the first entity the access to data associated with a specific application object only if the second entity meets data access rules defined in the provisioning database for requesting subscription to the specific application object.

9. A method according to any of claims 4 to 8, wherein associating of data with connected objects, specific application objects and second entities comprises accessing by the provisioning database to a data storage database, in which data is stored and from which data is delivered when granted access, using respective unique unambiguous identities of the connected objects, specific application objects and second entities.

10. A method according to any of claims 4 to 9, wherein the specific application objects are for a specific application which is charging and the unique unambiguous identity of each defined connected object is used to correlate different sources of data related to charging.

11. A method according to claim 10, further comprising correlating the data related to charging with specific application objects by an object charging data function entity, to which both the first and second entities have access through the provisioning database.

12. A method according to any preceding claim, wherein associating data with M2M devices comprises defining by the first entity a data stream which is a single data entity unambiguously associated with a connected object defined by the first entity in the provisioning database.

13. A machine-to-machine (M2M) system comprising:
one or more M2M devices associated with a first entity;
an M2M Service Enablement Platform connected to each of the one or more M2M devices and configured to selectively permit a second entity to access data associated with one or more of the said M2M devices,
a provisioning database associated with the M2M Service Enablement Platform, the provisioning database defining at least one connected object, each connected object being associated with data from one or more of the said associated M2M devices and each connected object having a corresponding data stream being associated with the first entity;
wherein the M2M Service Enablement Platform is configured to provide the second entity with partial or full access to one or more of the data streams from the connected objects of the first entity in accordance with permissions set by the first entity.

14. A system according to claim 3, wherein a number of M2M devices provide data to the M2M Service Enablement Platform over a wide area mobile telecommunications network.

15. A computer program comprising computer program code means adapted to perform the steps of the method according to any of claims 1 to 12, when said program is run on at least one programmable electronic device.
